# EUROPEAN PATENT APPLICATION

(11) **EP 4 825 662 A1**
(43) Date of publication of application: **21.10.2026**
(21) Application number: 26157457.8
(22) Date of filing: 10.02.2026
(51) Int. Cl.: B60R 5/04, B60R 13/01

(54) **LUGGAGE BOARD SUPPORT STRUCTURE**

(30) Priority: 18.04.2025 JP 2025068967
(71) Applicant: Suzuki Motor Corporation, Hamamatsu-shi, Shizuoka 432-8611 (JP)
(72) Inventor: UNNO, Takehisa, Hamamatsu-shi, 432-8611 (JP); KOSUGI, Yoshika, Hamamatsu-shi, 432-8611 (JP)
(74) Representative: Plasseraud IP

(57) **Abstract**

[Problem to be Solved] To improve a degree of freedom of a form of using a rear part of a vehicle compartment while supporting a luggage board.

[Solution] A luggage board support structure includes, in a rear part in a vehicle compartment of a vehicle, a support structure section 20 that supports a luggage board 10 disposed in a horizontal orientation facing a floor section 16 of the vehicle compartment. The support structure section 20 includes a first support section 21 that is provided on one sidewall of the vehicle compartment and supports a part of an outer edge portion 10a of the luggage board 10 and a second support section 22 capable of supporting, in cooperation with the first support section 21, the luggage board 10 disposed close to the one sidewall of the vehicle compartment, separated from the other sidewall of the vehicle compartment, and disposed in the horizontal orientation, the second support section 22 being provided at a position separated from the first support section 21.

## Description

### [Technical Field]

The present invention relates to luggage board support structures.

### [Background Art]

In a vehicle including a luggage compartment in a vehicle compartment rear part of the vehicle, the luggage compartment can be partitioned by a luggage board disposed in a horizontal orientation facing a floor upper surface of the luggage compartment. In such a vehicle, a support section that supports the luggage board is formed on a sidewall of the luggage compartment (that is, a rear side portion in a sidewall of a vehicle compartment).

For example, in a luggage compartment structure of a vehicle described in Patent Literature 1, a side portion of a luggage compartment is formed by a luggage side trim, a board support section that supports a vehicle width direction outer side portion of a luggage board is formed in each of a luggage side trim on the left side and a luggage side trim on the right side, and the luggage board is supported by left and right side portions (luggage side trims) of the luggage compartment. That is, in the luggage compartment structure described in Patent Literature 1, the luggage board is stretched from a board support section of a side portion on the left side of the luggage compartment to a board support section of a side portion on the right side of the luggage compartment.

### [Citation List]

### [Patent Literature]

[Patent Literature 1] JP 2005-306361 A

### [Summary of Invention]

### [Problem to be Solved by the Invention]

However, in the luggage compartment structure described in Patent Literature 1, since the luggage board is stretched from the board support section of the side portion on the left side of the luggage compartment to the board support section of the side portion on the right side of the luggage compartment, the luggage board prevents movement in the vehicle front-rear direction of an occupant, luggage, or the like in the luggage compartment. As a result, a form of using a rear part of the vehicle compartment is restricted by the luggage board, and ingenuity can be required.

The present invention has been devised in order to solve the problem described above, and an object of the present invention is to provide a luggage board support structure that can improve a degree of freedom of a form of using a rear part of a vehicle compartment compared with the related art while supporting a luggage board.

### [Means for Solving the Problem]

A luggage board support structure according to the present invention for achieving the object described above is a luggage board support structure including, in a rear part in a vehicle compartment of a vehicle, a support structure section that supports a luggage board disposed in a horizontal orientation facing a floor section of the vehicle compartment, in the luggage board support structure, the support structure section including: a first support section that is provided on one sidewall of the vehicle compartment and supports a part of an outer edge portion of the luggage board; and a second support section capable of supporting, in cooperation with the first support section, the luggage board disposed close to the one sidewall of the vehicle compartment and separated from another sidewall of the vehicle compartment and disposed in the horizontal orientation, the second support section being provided at a position separate from the first support section.

### [Advantageous Effect of Invention]

According to the present invention, it is possible to provide a luggage board support structure that can improve a degree of freedom of a form of using a rear part of a vehicle compartment compared with the related art while supporting a luggage board.

### [Brief Description of Drawings]

[Figure 1] Figure 1 is a partial perspective view including a main part of a luggage board support structure according to an embodiment of the present invention.
[Figure 2] Figure 2 is a conceptual diagram for explaining the position of a luggage board.
[Figure 3] Figure 3 is a perspective view of the luggage board.
[Figure 4] Figure 4 is a perspective view of a side trim that supports the luggage board.
[Figure 5] Figure 5 is a plan view of the side trim viewed from the inside of a luggage compartment.
[Figure 6] Figure 6 is a perspective view for explaining an example of a support state of the luggage board in a state in which a seat back section of a rear seat is laid down.
[Figure 7] Figure 7 is a conceptual diagram for explaining an embodiment shown in Figure 6.
[Figure 8] Figure 8 is a perspective view for explaining another example (a modification 1) of the support state of the luggage board in the state in which the seat back section of the rear seat is laid down.
[Figure 9] Figure 9 is an enlarged plan view in which an A part shown in Figure 8 is viewed from above.
[Figure 10] Figure 10 is a perspective view for explaining an example (a modification 2) of a support state of the luggage board in a state in which the rear seat is housed.
[Figure 11] Figure 11 is a conceptual diagram for explaining the modification 2 shown in Figure 10.
[Figure 12] Figure 12 is a perspective view for explaining another example (a modification 3) of the support state of the luggage board in the state in which the rear seat is housed.
[Figure 13] Figure 13 is a conceptual diagram for explaining the modification 3 shown in Figure 12.
[Figure 14] Figure 14 is a perspective view in which the support state of the luggage board shown in Figure 12 is viewed from the inside of the vehicle compartment.
[Figure 15] Figure 15 is an enlarged plan view in which a B part shown in Figure 12 is viewed from above.
[Figure 16] Figure 16 is a diagram for explaining a modification of a sidewall side restricting section and a first section to be restricted of the luggage board support structure.
[Figure 17] Figure 17 is a diagram for explaining another modification of the sidewall side restricting section and the first section to be restricted.
[Figure 18] Figure 18 is a diagram for explaining still another modification of the sidewall side restricting section and the first section to be restricted.

### [Mode for Carrying Out the Invention]

An embodiment of a luggage board support structure according to the present invention is explained below with reference to the drawings.

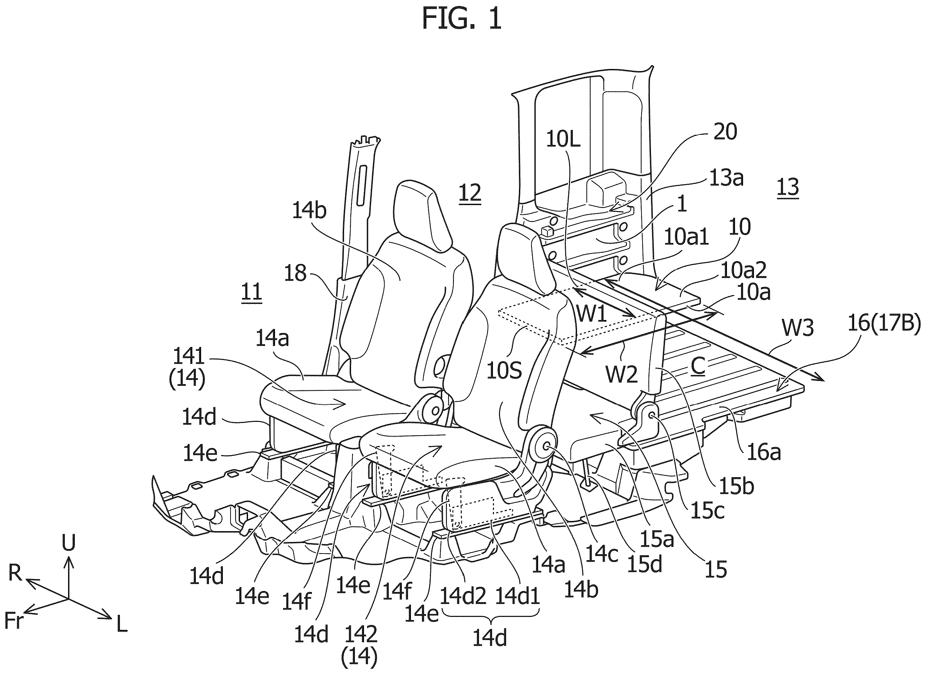

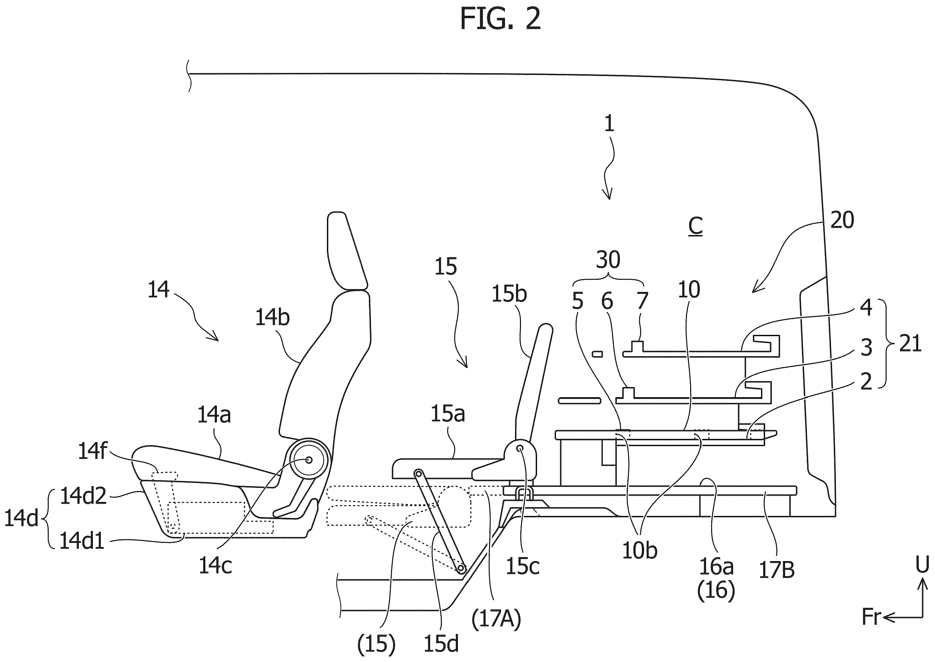

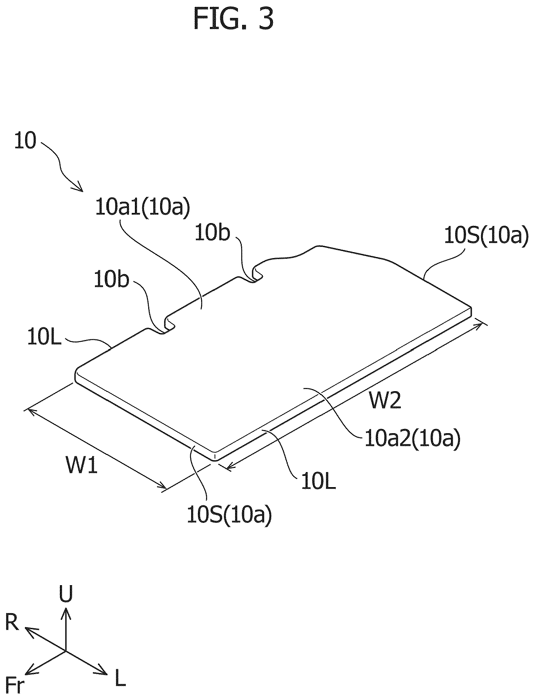

Figure 1 is a partial perspective view including a main part of a luggage board support structure according to an embodiment of the present invention, Figure 2 is a conceptual diagram for explaining the position of a luggage board 10, and Figure 3 is a perspective view of the luggage board 10. Note that, in the figures, an arrow F direction indicates the front (the vehicle front) in the vehicle front-rear direction and an arrow B direction indicates the rear (the vehicle rear) in the vehicle front-rear direction. An arrow R and an arrow L indicate a right side and a left side in the vehicle width direction at the time when an occupant in a vehicle compartment views the vehicle front. An arrow U indicates the upward direction in the vehicle up-down direction.

Referring to Figure 1 and Figure 2, the luggage board support structure in the present embodiment is applied to a vehicle in which a vehicle compartment rear part (that is, a rear side region in the vehicle compartment) of the vehicle is mainly used as a luggage compartment C. The occupant of the vehicle can access the inside of the vehicle compartment through a front side door opening 11 opened and closed by a front side door (not shown), a rear side door opening 12 opened and closed by a rear side door (not shown), and a back door opening 13 opened and closed by a back door (not shown).

The luggage board support structure is a structure for supporting the luggage board 10 in a rear part (in particular, the luggage compartment C) in the vehicle compartment of the vehicle. The luggage board support structure includes vehicle seats (14 and 15) and a side trim 1.

The vehicle seats (14 and 15) are seats disposed in the vehicle compartment for occupants to sit on. In an example shown, a front seat 14 and a rear seat 15 are disposed as the vehicle seats (14 and 15). The front seat 14 is disposed in the front of the rear seat 15, and in the example shown, divided into a driver's seat side seat 141 and a passenger seat side seat 142. The seats (14 and 15) are directly fixed to a floor panel configuring a bottom surface of the vehicle compartment or is fixed to the floor panel via a seat fixing member (for example, a seat attachment bracket or a seat cross member).

Each of the driver's seat side seat 141 and the passenger seat side seat 142 includes a seat section 14a, a bottom section 14d that supports the seat section 14a and is fixed to the floor panel, and a seat back section 14b attached to a rear part of the bottom section 14d.

The rear seat 15 is disposed behind the front seat 14 and includes a seat section 15a and a seat back section 15b attached to a rear part of the seat section 15a.

In the seats (14 and 15), the seat back sections (14b and 15b) are configured to be capable of adjusting a seat angle with respect to the seat sections (14a and 15a). That is, the seat back sections (14b and 15b) are capable of being laid down to the front side from a standing state. Specifically, each of the driver's seat side seat 141 and the passenger seat side seat 142 includes a tilting shaft section 14c that couples the seat back section 14b to the rear part of the bottom section 14d to be tiltable. The rear seat 15 includes a tilting shaft section 15c that couples the seat back section 15b to a rear part of the seat section 15a to be tiltable.

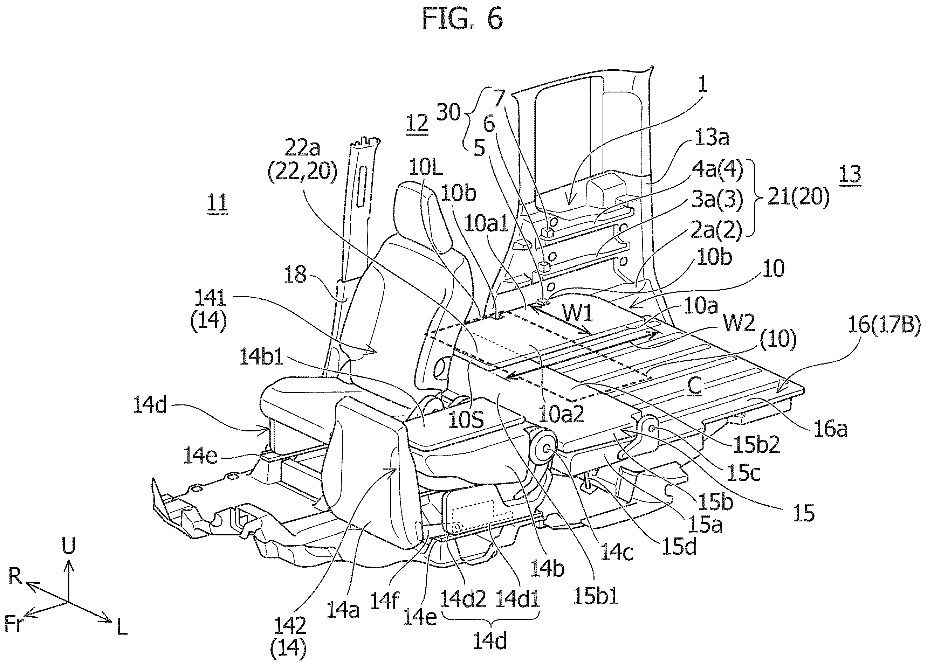

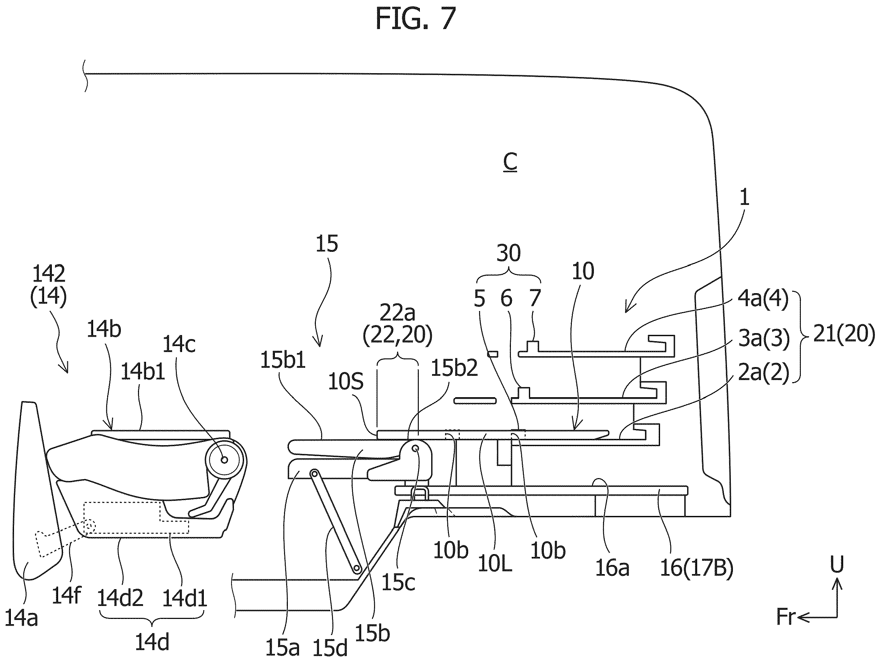

Although not particularly limited, in the front seat 14, the seat section 14a of the passenger seat side seat 142 is attached to a front part of the bottom section 14d of the passenger seat side seat 142 to be turnable forward centering on a front part of the seat section 14a. In the passenger seat side seat 142 shown in Figure 6 and Figure 7 explained below, the seat back section 14b is laid down to the front side in a state in which the seat section 14a of the passenger seat side seat 142 is turned forward. As a result, a region on the passenger seat side of the vehicle compartment can be used as a multipurpose space that is wide in the front and back such as a stable place for putting a long article or a comfortable temporary bed.

Specifically, in the bottom section 14d of the passenger seat side seat 142, a turning mechanism 14f that turns the seat section 14a between a seating position (a position, or a state shown in Figure 1 and Figure 2) and a retracted position (a position or a state shown in Figure 6 to Figure 8, explained below) is provided. The bottom section 14d includes a bottom frame 14d1 forming a skeleton of the bottom section 14d and a bottom trim 14d2 covering the bottom frame 14d1. One end of the turning mechanism 14f is turnably coupled to a front part of the bottom frame 14d1 and the other end of the turning mechanism 14f is fixed to a front part of the seat section 14a. When being displaced from a state of being in the seating position to the retracted position, the seat section 14a of the passenger seat side seat 142 changes to a state of standing with the front part of the seat section 14a directed downward in a foot space, which is a space in the front of the bottom section 14d. In the example shown, the front seat 14 is configured to be slidable in the vehicle front-rear direction via a slide rail 14e.

In the state in which the rear seat 15 is standing, a region behind the seat back section 15b of the rear seat 15 in the vehicle compartment can be used as the luggage compartment C. Here, the rear seat 15 is a seat of a so-called "dive down type". Specifically, the rear seat 15 includes a moving mechanism 15d that movably supports the seat section 15a between the seating position and a housing position (the foot space), which is in front of and below the seating position, in a state in which a seat surface is maintained generally parallel. The rear seat 15 is moved, via the moving mechanism 15d, between a seating state (see Figure 1 and Figure 2) in which the seat section 15a is located at the seating position and the seat back section 15b is standing, and a housing state (a state indicated by a broken line in Figure 2) in which the seat section 15a is moved to the housing position and the seat back section 15b is laid down forward, the rear seat 15 being configured to be switchable to the seating state and the housing state. Note that, although not particularly limited, in the example shown, the rear seat 15 is a seat of a bench seat type including one seat section 15a and one seat back section 15b.

In Figure 2, referring to the rear seat 15 indicated by a broken line, in the housing position, the seat section 15a and the seat back section 15b of the rear seat 15 are located further in the front than a floor section 16 by a predetermined interval. A gap between the seat section 15a and the seat back section 15b of the rear seat 15 present at the housing position and the floor section 16 is covered from above by an auxiliary board 17A (a blindfold section) provided separately from the luggage board 10. The front end of the auxiliary board 17A is supported by the rear seat 15. In the example shown, the auxiliary board 17A is configured such that a height position of the upper surface of the auxiliary board 17A and a height position of a floor upper surface 16a, which is the upper surface of a rear part (also referred to as rear floor) of the floor section 16 of the vehicle compartment of the vehicle, generally coincide with each other.

The rear surface of the seat back section 15b of the rear seat 15 (in other words, a seat upper surface 15b1 that is the upper surface of the seat back section 15b facing the upper surface of the seat section 15a and taking a laid-down orientation) is formed as a flat surface without unevenness. In the example shown, the rear surface of the seat back section 14b of the passenger seat side seat 142 (in other words, a seat upper surface 14b1 that is the upper surface of the seat back section 14b facing the upper surface of the seat section 14a and taking a laid-down orientation) has a flat surface.

In the present embodiment, a rear part of the floor section 16 of the vehicle compartment of the vehicle (that is, a portion configuring the bottom surface of the luggage compartment C of the vehicle compartment rear part) is formed by a floorboard 17B detachably disposed on a member on a vehicle body side and the floor upper surface 16a, which is the upper surface of the floor section 16, is configured by the upper surface of the floorboard 17B.

The luggage board 10 is a plate member disposed in the luggage compartment C and partitioning the luggage compartment C. The luggage board 10 has predetermined thickness and is formed in a plate shape. Referring to Figure 3, in the present embodiment, the luggage board 10 has, for example, a generally rectangular external shape in plan view.

The luggage board 10 is disposed, in a rear part in the vehicle compartment of the vehicle, in a horizontal orientation facing the floor section 16 of the vehicle compartment. The luggage board 10 is formed, in the rear part in the vehicle exterior, in a state of being disposed in the horizontal orientation while being disposed close to one side trim 1 explained below configuring one sidewall of the vehicle compartment, in a size (a dimension) capable of securing a gap between the luggage board 10 and the other side trim 1 configuring the other sidewall of the vehicle compartment.

In the example shown, the luggage board 10 has a rectangular external shape having a short edge portion 10S and a long edge portion 10L longer than the short edge portion 10S. That is, a lateral direction width W1, which is a board width in the lateral direction of the luggage board 10, is shorter than a longitudinal direction width W2, which is a board width in the longitudinal direction of the luggage board 10 (W1<W2).

The luggage board 10 has a board width shorter than an interior width W3 in the vehicle width direction of the vehicle compartment and is disposed, in the rear part in the vehicle compartment of the vehicle, close to one side trim 1 explained below configuring one sidewall of the vehicle compartment. In the example shown in Figure 1 and Figure 2, both of the lateral direction width W1 and the longitudinal direction width W2 are shorter than the interior width W3 (W1<W2<W3). In Figure 1 and Figure 2, a state in which the luggage board 10 is disposed close to the sidewall (the side trim 1) on the right side is shown. In the example shown, the luggage board 10 is disposed with the long edge portion 10L disposed close to one side trim 1 in a state in which the lateral direction (an extending direction of the short edge portion 10S) is directed to the vehicle width direction. Note that the lateral direction width W1 only has to be shorter than the interior width W3 (W1<W3) and the longitudinal direction width W2 may be the same as the interior width W3 or may be longer than the interior width W3 (that is, W2=W3 or W2>W3). Therefore, the rectangular luggage board 10 may not be able to be disposed in a state in which the longitudinal direction is directed to the vehicle width direction.

In the present embodiment, at a board outer edge portion 10a1 (in the example shown, the long edge portion 10L on the right side), which is one outer edge portion in the vehicle width direction of the luggage board 10 disposed in the horizontal orientation facing the floor section 16 of the vehicle compartment of the vehicle, first sections to be restricted 10b capable of engaging with sidewall side restricting sections (5, 6, and 7) explained below are formed. In the example shown, two first sections to be restricted 10b are provided at an interval from each other in a direction along the board outer edge portion 10a1. In other words, in the present embodiment, the luggage board 10 includes a first edge portion in which the first sections to be restricted 10b capable of engaging with the sidewall side restricting sections (5, 6, and 7) are formed. In the example shown, the first edge portion is the long edge portion 10L (the board outer edge portion 10a1).

When the luggage board 10 is disposed behind the rear seat 15 in the horizontal orientation in a state in which the seat back section 15b of the rear seat 15 is standing, the luggage compartment C is partitioned in the vehicle up-down direction in a region corresponding to the luggage board 10. When the seat back section 15b of the rear seat 15 is laid down to the front side and takes a laid-down orientation, a region that can be used as the luggage compartment C in the vehicle compartment is expanded forward.

The luggage board support structure in the present embodiment includes the side trim 1 configuring the sidewall of the vehicle compartment in the rear part (that is, the luggage compartment C) in the vehicle compartment of the vehicle. That is, the side trim 1 in the present embodiment is a portion on the rear side in the sidewall of the vehicle and configures an end wall in the vehicle width direction of the luggage compartment C. The side trims 1 are provided on both sides in the vehicle width direction of the floor section 16 of the vehicle compartment rear part. The side trim 1 is also called luggage compartment sidewall or rear side trim. Note that, in Figure 1 and Figure 2, the side trim 1 on the vehicle width direction right side is shown and the side trim 1 on the vehicle width direction left side is detached.

The side trim 1 is an interior member disposed on the vehicle inner side of a quarter inner panel and a rear wheelhouse of the vehicle body, and in the example shown, also has a function for supporting the luggage board 10. The side trim 1 is made of a resin molded product having a swelled shape. A region on the lower side of the side trim 1 largely swells to the vehicle width direction inner side to correspond to a wheelhouse and the like of the vehicle body. A center pillar trim 18 is provided in the front of the side trim 1. The front edge of the side trim 1 forms the opening rear edge of the rear side door opening 12. The rear edge of the center pillar trim 18 forms the opening front edge of the rear side door opening 12. In the present embodiment, a trim forming an opening edge portion 13a (specifically, an opening side edge and an opening lower edge) of the back door opening 13 is integrally formed in a rear part of the side trim 1.

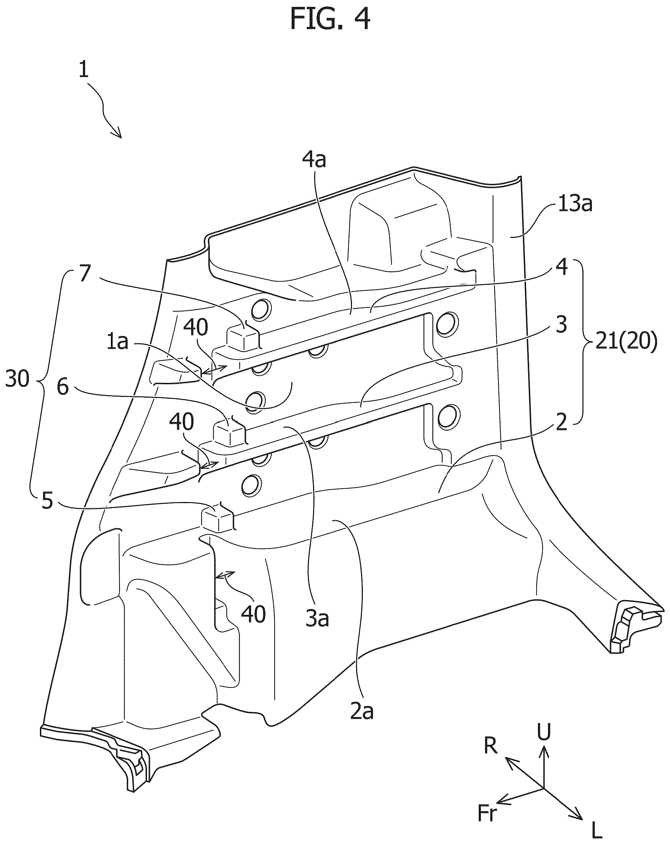

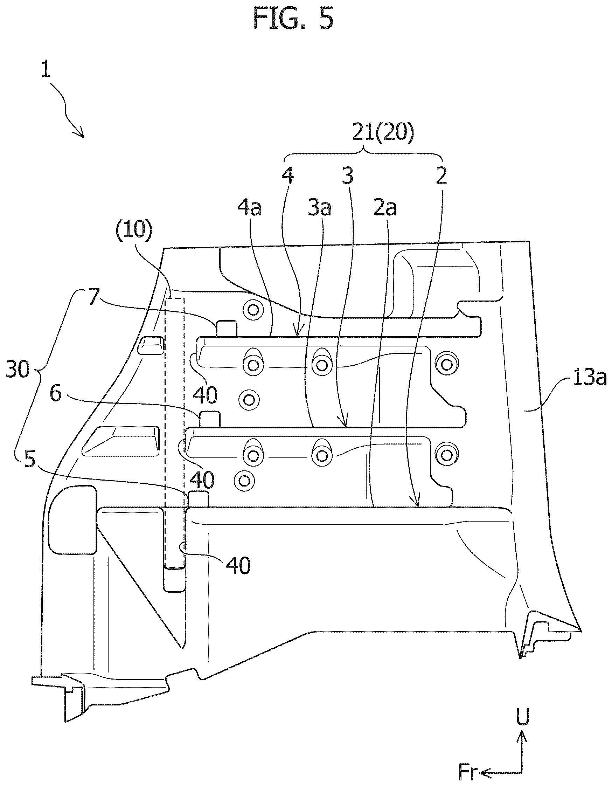

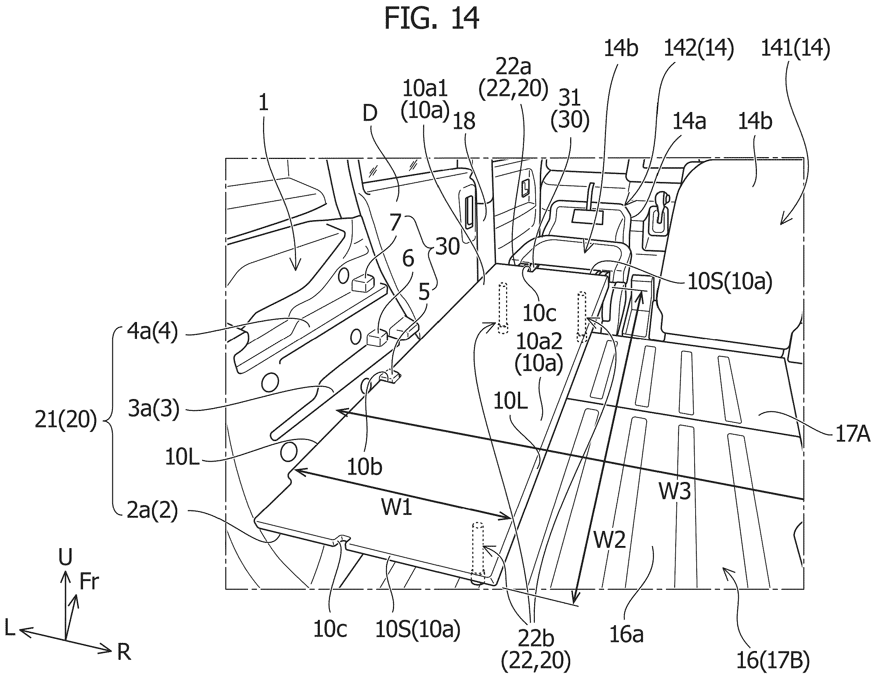

Figure 4 is a perspective view of the side trim 1 and Figure 5 is a plan view of the side trim 1 viewed from the inside of the luggage compartment C. As explained above, the side trims 1 are provided on both the sides in the vehicle width direction of the floor section 16 in the vehicle compartment rear part (in other words, a rear floor section). In Figure 4 and Figure 5 (furthermore, Figure 6 to Figure 8 and Figure 10 to Figure 13 explained below), the side trim 1 on the right side is shown. In Figure 14 explained below, the side trim 1 on the left side is shown. In the present embodiment, the side trim 1 on the left side has the same shape as a shape explained in detail below except that the side trim 1 on the left side is symmetrical to the side trim 1 on the right side in the vehicle width direction.

The luggage board support structure includes, in the rear part in the vehicle compartment of the vehicle, a support structure section 20 that supports the luggage board 10 disposed in the horizontal orientation facing the floor section 16 of the vehicle compartment. In at least one side trim 1 of the left and right side trims (1 and 1), a first support section 21, which is a part of the support structure section 20, is provided. The first support section 21 is provided on at least one sidewall (the side trim 1) of left and right sidewalls of the vehicle compartment and supports a part of an outer edge portion 10a of the luggage board 10. In the example shown, the luggage board 10 has a generally rectangular external shape in plan view as explained above. The first support section 21 supports the board outer edge portion 10a1 (specifically, the long edge portion 10L), which is one outer edge portion in the vehicle width direction. Although not particularly limited, in the example shown, the first support sections 21 are provided in both of the side trim 1 on the left side and the side trim 1 on the right side. The support structure section 20 can use any one first support section 21 of the first support section 21 on the left side and the first support section 21 on the right side.

In the present embodiment, the first support section 21 of the support structure section 20 includes a plurality of support sections (2, 3, and 4) different in height from one another, the plurality of support sections (2, 3, and 4) being capable of respectively supporting parts of the outer edge portion 10a of the luggage board 10 disposed in the horizontal orientation. In the example shown, three support sections (2, 3, and 4), that is, a lower support section 2, a middle support section 3, and an upper support section 4 are disposed at intervals from one another in the vehicle up-down direction.

The support sections (2, 3, and 4) configure parts of the side trim 1. In the example shown, the lower support section 2 is a support section at a lower stage, the middle support section 3 is a support section at a middle stage located above the lower support section 2, and the upper support section 4 is a support section at an upper stage located above the middle support section 3. In the example shown, the luggage board support structure is configured to be able to support, at any one stage (height position) among the lower stage, the middle stage, and the upper stage, with the support section (2, 3, or 4), a part of the outer edge portion 10a of the luggage board 10 that takes the horizontal orientation. In Figure 1 and Figure 2, a state in which the luggage board 10 is supported from below by the lower support section 2 at the height position of the lower stage is shown.

The support sections (2, 3, and 4) are disposed further in the vehicle rear than the rear seat 15. That is, the seats (14 and 15) are disposed in the vehicle compartment further in the vehicle front than the support sections (2, 3, and 4). The support sections (2, 3, and 4) project to the vehicle width direction inner side from a predetermined reference plane 1a on the surface on the vehicle width direction inner side of the side trim 1 to the vehicle width direction inner side and extend in the vehicle front-rear direction.

In the present embodiment, the support sections (2, 3, and 4) include support surfaces (2a, 3a, and 4a) that support the lower surface of the outer edge portion 10a. The support surfaces (2a, 3a, and 4a) face vehicle upward and extend in the vehicle front-rear direction.

In the present embodiment, the support structure section 20 includes a movement restricting section 30 that restricts movement of the luggage board 10. In the present embodiment, the movement restricting section 30 includes sidewall side restricting sections (5, 6, and 7) provided on at least one sidewall (side trim 1) of the left and right sidewalls. Although not particularly limited, in the example shown, the sidewall side restricting sections (5, 6, and 7) are provided in both of the side trim 1 on the left side and the side trim 1 on the right side.

In the example shown, three sidewall side restricting sections (5, 6, and 7), that is, a lower restricting section 5, a middle restricting section 6, and an upper restricting section 7 are provided. In the example shown, the lower restricting section 5 is provided on the support surface 2a of the lower support section 2, the middle restricting section 6 is provided on the support surface 3a of the middle support section 3, and the upper restricting section 7 is provided on the support surface 4a of the upper support section 4. A vehicle front-rear direction position of the lower restricting section 5 is located slightly in the front with respect to a vehicle front-rear direction position of the middle restricting section 6. A vehicle front-rear direction position of the upper restricting section 7 is located slightly in the rear with respect to the vehicle front-rear direction position of the middle restricting section 6.

In the example shown, the sidewall side restricting sections (5, 6, and 7) have a convex shape projecting upward from the support surfaces (2a, 3a, and 4a) corresponding thereto. In the example shown, the sidewall side restricting sections (5, 6, and 7) have generally trapezoidal cross sections narrowed in the front-rear width from the reference plane 1a side toward the vehicle width direction inner side, project vehicle upward, and are disposed in front parts of the support surfaces (2a, 3a, and 4a).

The first sections to be restricted 10b of the luggage board 10 are formed at the board outer edge portion 10a1 of the luggage board 10 in a shape capable of making contact with the sidewall side restricting sections (5, 6, and 7) of the side trim 1. In the example shown, the first sections to be restricted 10b are formed in a concave shape corresponding to the convex shape of the sidewall side restricting sections (5, 6, and 7) and are opened to the vehicle width direction outer side. Specifically, the first sections to be restricted 10b are formed as generally trapezoidal slits narrowed in the front-rear width from an opening end side of the vehicle width direction outer side toward the vehicle width direction inner side. A slit shape of the first section to be restricted 10b on the front side is the same as a slit shape of the first section to be restricted 10b on the rear side. In the example shown in Figure 1 to Figure 5, the sidewall side restricting sections (5, 6, and 7) at any stage can fit in the first section to be restricted 10b on the front side or the rear side of the luggage board 10 in the horizontal orientation. The luggage board 10 is configured to be restricted from moving in the front-rear direction of the luggage board 10 in the horizontal orientation when the first sections to be restricted 10b corresponding to the front surface or the rear surface of the sidewall side restricting sections (5, 6, and 7) come into contact with the front surface or the rear surface. Note that, in Figure 1 and Figure 2, in a state in which the lower restricting section 5 is fit in the first section to be restricted 10b on the front side in the lower support section 2, the luggage board 10 is separated rearward from a rear part of the rear seat 15 and disposed in the horizontal orientation.

Here, as explained above, the luggage board 10 has the board width shorter than the interior width W3 in the vehicle width direction of the vehicle compartment and is disposed close to one sidewall (in Figure 1, the side trim 1 on the right side) of the vehicle compartment. In the example shown, the luggage board 10 is disposed with the long edge portion 10L disposed close to one side trim 1 in a state in which the lateral direction (an extending direction of the short edge portion 10S shorter than the interior width W3) is directed to the vehicle width direction. Therefore, in the rear part (in particular, the luggage compartment C) of the vehicle compartment, a region wide in the vehicle front-rear direction not blocked by the luggage board 10 is secured between the luggage board 10 disposed in the horizontal orientation and the other sidewall (here, the side trim 1 on the left side) of the vehicle compartment. That is, the board outer edge portion 10a1, which is one outer edge portion in the vehicle width direction of the luggage board 10, is supported by the first support section 21 provided on one sidewall of the vehicle compartment and a board outer edge portion 10a2, which is the other outer edge portion in the vehicle width direction of the luggage board 10, is separated from the other sidewall of the vehicle compartment. Since the luggage board 10 is disposed close to one sidewall of the vehicle compartment and separated from the other sidewall of the vehicle compartment and is disposed in the horizontal orientation as explained above, the luggage board 10 is unstable only by the support by the first support section 21 of one sidewall.

The luggage board support structure according to the present embodiment has structure explained below in order to achieve stable support for the luggage board 10 disposed close to one sidewall of the vehicle compartment and separated from the other sidewall of the vehicle compartment and disposed in the horizontal orientation. Note that, in the following explanation, unless particularly referred to otherwise, "one sidewall" is the sidewall (the side trim 1) to which the luggage board 10 is disposed close of the sidewall (the side trim 1) on the left side and the sidewall (the side trim 1) on the right side, "the other sidewall" is the sidewall (the side trim 1) separated from the luggage board 10, the board outer edge portion 10a1, which is "one outer edge portion in the vehicle width direction" of the generally rectangular luggage board 10, is an outer edge portion disposed close to the sidewall, and the board outer edge portion 10a2, which is "the other outer edge portion in the vehicle width direction" of the generally rectangular luggage board 10, is an outer edge portion on the side of the other sidewall of the vehicle compartment.

Figure 6 and Figure 7 are diagrams for explaining an example of a support state of the luggage board 10 in a state in which the seat back section 15b of the rear seat 15 is laid down. Figure 6 is a perspective view and Figure 7 is a conceptual diagram viewed from a side.

The support structure section 20 includes a second support section 22 in order to achieve stable support for the luggage board 10. The second support section 22 is a support element capable of supporting, in cooperation with the first support section 21, the luggage board 10 disposed close to one sidewall of the vehicle compartment and separated from the other sidewall (in the example shown, the side trim 1 on the left side) of the vehicle compartment and disposed in the horizontal orientation and is provided at a position separated from the first support section 21.

In the present embodiment, the second support section 22 includes a vehicle body side support section 22a that supports the luggage board 10 provided in a vehicle body side member. The vehicle body side member, in which the vehicle body side support section 22a is provided, is a member including the vehicle seats (14 and 15) disposed in the vehicle compartment or the opening edge portion 13a of the back door opening 13. In the example shown, the vehicle body side support section 22a is provided in the rear seat 15 of the vehicle seats and configured by a part of the rear seat 15. In other words, in the present embodiment, the second support section 22 includes the vehicle body side support section 22a that is disposed in the vehicle compartment and supports the luggage board 10.

Specifically, referring to Figure 6 and Figure 7, in the example shown, the seat back section 15b of the rear seat 15 is laid down to the front side and takes a laid-down orientation facing the upper surface of the seat section 15a. In a state in which the lower restricting section 5 is fit in the first section to be restricted 10b on the rear side in the lower support section 2 of the first support section 21, a front part of the luggage board 10 is placed on a rear part 15b2 in the seat upper surface (a back surface) 15b1 of the seat back section 15b and the luggage board 10 is disposed in the horizontal orientation. The rear part 15b2 of the seat upper surface 15b1 supports, in cooperation with the first support section 21, the luggage board 10 disposed close to the side trim 1 on the right side and separated from the side trim 1 on the left side and disposed in the horizontal orientation and is provided at a position separated from the first support section 21. Therefore, in the example shown, the vehicle body side support section 22a of the second support section 22 is the rear part 15b2 in the seat upper surface 15b1 of the seat back section 15b of the rear seat 15 that takes the laid-down orientation. Specifically, the short edge portion 10S on the front side of the luggage board 10 is supported from below by the rear part 15b2 of the seat upper surface 15b1.

In the present embodiment, at least a part of the second support section 22 is provided at a position separating from the first support section 21 to the vehicle width direction inner side. Specifically, referring to Figure 6, a portion overlapping the luggage board 10 in the rear part 15b2 of the seat upper surface 15b1 configures the second support section 22. Most of the portion overlapping the luggage board 10 in the rear part 15b2 is provided at a position separating from the first support section 21 to the vehicle width direction inner side.

In the present embodiment, at least a part of the second support section 22 includes a portion located below the other outer edge portion (the board outer edge portion 10a2) in the vehicle width direction of the luggage board 10.

Specifically, referring to Figure 6, an inner side portion in the vehicle width direction of the portion overlapping the luggage board 10 in the rear part 15b2 of the seat upper surface 15b1 is located below the other outer edge portion (the board outer edge portion 10a2) in the vehicle width direction of the luggage board 10.

The luggage board support structure according to the present embodiment includes, in the rear part in the vehicle compartment of the vehicle, the support structure section 20 that supports the luggage board 10 disposed in the horizontal orientation facing the floor section 16 of the vehicle compartment. The support structure section 20 includes the first support section 21 that is provided on one sidewall of the vehicle compartment and supports a part of the outer edge portion 10a of the luggage board 10 and the second support section 22 capable of supporting, in cooperation with the first support section 21, the luggage board 10 disposed close to one sidewall of the vehicle compartment and separated from the other sidewall of the vehicle compartment and disposed in the horizontal orientation. The second support section 22 is provided at a position separated from the first support section 21.

Therefore, as shown in Figure 6, for example, in a state in which the lateral direction is directed to the vehicle width direction, the luggage board 10 disposed close to one sidewall (in Figure 6, the side trim 1 on the right side) of the vehicle compartment and separated from the other sidewall (here, the side trim 1 on the left side) of the vehicle compartment and disposed in the horizontal orientation is supported by the first support section 21 and the second support section 22, whereby the luggage board support structure can achieve stable support for the luggage board 10 while securing, between the luggage board 10 and the other sidewall of the vehicle compartment, a region wide in the vehicle front-rear direction not blocked by the luggage board 10.

The region secured between the luggage board 10 and the other sidewall of the vehicle compartment can be used as a space for allowing free movement in the vehicle front-rear direction of an occupant, luggage, or the like. Since the luggage board 10 is disposed close to one sidewall of the vehicle compartment and in the horizontal orientation, if the luggage board 10 is used as a work desk, the luggage compartment C can also be used as a work space.

When the vehicle compartment is configured such that the rear side door opening 12 or the back door opening 13 face (communicate with) the region between the luggage board 10 and the other sidewall of the vehicle compartment, a user such as an occupant can access, from the rear side door opening 12 or the back door opening 13, the region between the luggage board 10 and the other sidewall of the vehicle compartment. In this way, the luggage board support structure according to the present embodiment can improve a degree of freedom of a form of using the rear part of the vehicle compartment compared with the related art while supporting the luggage board 10.

Note that, in the example shown, since the generally rectangular luggage board 10 is shorter in the longitudinal direction width W2 as well than the interior width W3, as indicated by a thick broken line in Figure 6, the luggage board 10 can be disposed in the horizontal orientation even in a state in which the longitudinal direction is directed to the vehicle width direction. Even in this case, the luggage board support structure can be stably supported by the first support section 21 and the second support section 22.

In the present embodiment, since at least a part of the second support section 22 is provided at the position separated from the first support section 21 to the vehicle width direction inner side, the support structure section 20 can support the luggage board 10 on both sides of one side and the other side in the vehicle width direction. As a result, stability of support of the luggage board 10 is achieved.

In the present embodiment, at least a part of the second support section 22 includes a portion located below the other outer edge portion (the board outer edge portion 10a2) in the vehicle width direction of the luggage board 10, the support structure section 20 can support one board outer edge portion 10a1 and the other board outer edge portion 10a2 of the luggage board 10 from below. As a result, stability of support of the luggage board 10 is effectively achieved.

In the present embodiment, since movement of the luggage board 10 is restricted by the movement restricting section 30, the movement (displacement or positional deviation) of the luggage board 10 is reduced and the luggage board 10 is easily maintained at a predetermined position. As a result, shaking of luggage that can be placed on the luggage board 10 is reduced and stable placement of the luggage is achieved. When the luggage board 10 is used as a work desk, improvement of work efficiency is achieved.

In the present embodiment, the movement restricting section 30 includes the sidewall side restricting sections (5, 6, and 7) provided on one sidewall (the side trim 1) of the vehicle compartment. Therefore, since movement of one outer edge portion (the board outer edge portion 10a1) of the luggage board 10 supported by the first support section 21 is reduced by the sidewall side restricting sections (5, 6, and 7), stable support for the luggage board 10, stable placement of luggage, and improvement of work efficiency in the luggage board 10 are more effectively achieved.

In the present embodiment, the second support section 22 includes the vehicle body side support section 22a that is provided in the vehicle body side member (in the example shown, the rear seat 15) disposed in the vehicle compartment and supports the luggage board 10. Therefore, the support structure section 20 can configure the second support section 22 using a vehicle body side member such as a vehicle seat disposed in the vehicle compartment or the opening edge portion 13a of the back door opening 13.

When the front part of the luggage board 10 is disposed to overlap the seat upper surface (the back surface) 15b1 of the seat back section 15b of the rear seat 15 as shown in Figure 6, luggage having width larger than the lateral direction width W1 of the luggage board 10 can be supported by the seat back section 15b and the luggage board 10 and stable support for large luggage can be achieved.

In the example shown in Figure 6, since there is a step between the seat upper surface 15b1 of the seat back section 15b and the luggage board 10, when luggage is not placed on the luggage board 10 and is placed on the seat upper surface 15b1, movement of the luggage to the luggage board 10 side can be restricted by the step.

When the rear seat 15 and the luggage board 10 are in the state shown in Figure 6, not only the luggage board 10 but also the seat upper surface 15b1 of the seat back section 15b of the rear seat 15 can be used as a work desk. When luggage is placed on the floor section 16 in the state shown in Figure 6, movement of the luggage can be restricted by the rear part of the rear seat 15 and the luggage board 10. For example, when large luggage placed on the floor section 16 projects above the laid-down seat back section 15b or luggage board 10, the large luggage comes into contact with the rear part of the rear seat 15 or the edge portion of the luggage board 10 and movement of the large luggage is restricted.

In the present embodiment, the luggage board support structure includes a vertical support section 40 that supports the luggage board 10 in a vertical orientation orthogonal to the floor upper surface 16a, which is the upper surface of the floor section 16. The vertical support section 40 is formed to cross at least one of the plurality of support sections (2, 3, and 4). In Figure 5, an external shape of the luggage board 10 supported in the vertical orientation by the vertical support section 40, is indicated by a broken line. In the example shown, the vertical support section 40 crosses the support sections (2, 3, and 4) in the side trim 1 and is formed as a groove section extending in the vehicle up-down direction and opened to the vehicle width direction inner side. When the outer edge portion 10a of the luggage board 10 is inserted into the vertical support section 40 from above, the luggage board 10 is supported in the vertical orientation.

The explanation of the present embodiment is exemplification for explaining the present invention and does not limit the invention as claimed in the claims. The components of the present invention are not limited to the embodiment, and various modifications and changes explained below, and combinations of the modifications and the changes are possible within the technical scope in the claims.

### (Modification 1)

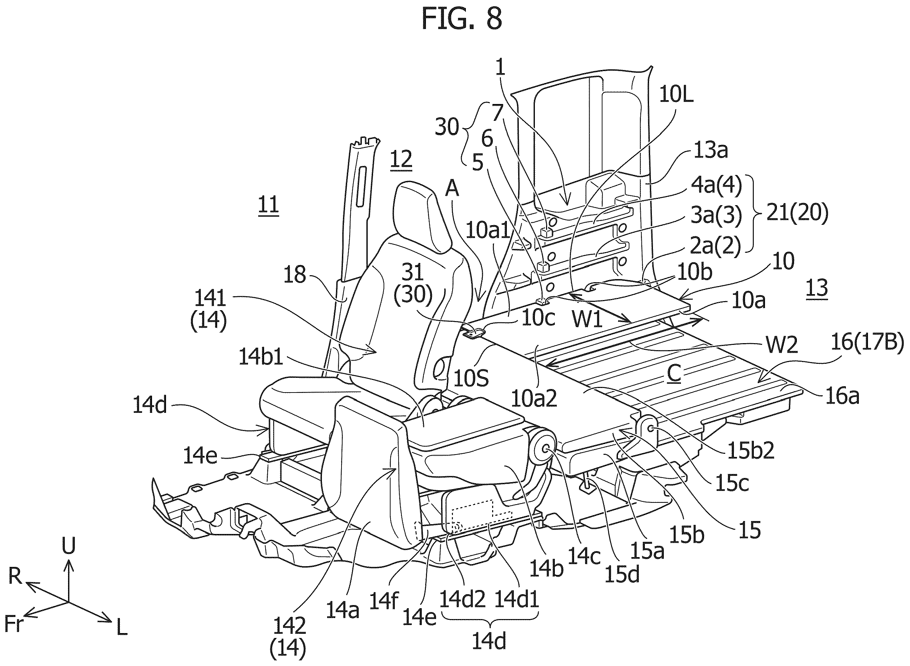

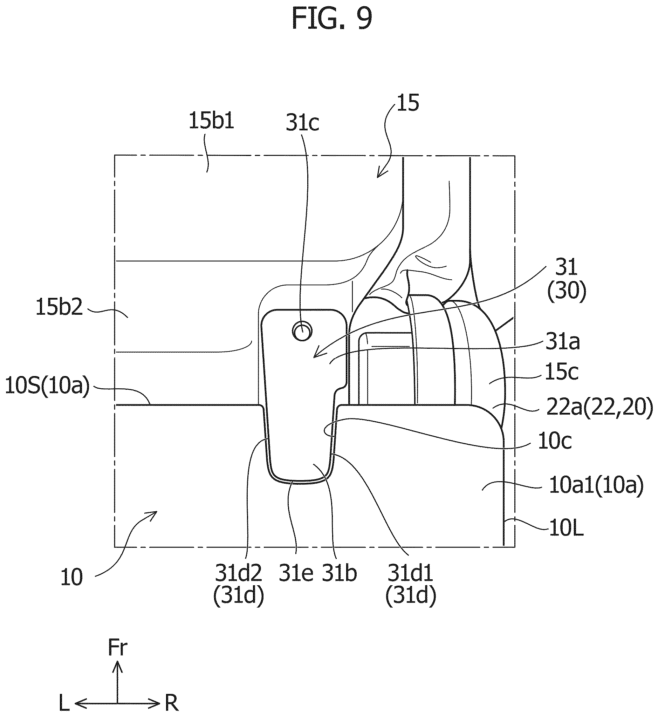

A modification 1 is explained with reference to Figure 8 and Figure 9. Figure 8 and Figure 9 are diagrams for explaining another example (the modification 1) of the support state of the luggage board 10 in the state in which the seat back section 15b of the rear seat 15 is laid down. Figure 8 is a perspective view and Figure 9 is an enlarged plan view in which an A part shown in Figure 8 is viewed from above.

As shown in Figure 8 and Figure 9, the vehicle body side support section 22a may be the tilting shaft section 15c of the rear seat 15. The movement restricting section 30 may include a vehicle body side restricting section 31 provided around the vehicle body side support section 22a.

Specifically, in the modification 1, the short edge portion 10S on the front side of the luggage board 10 is placed on an upper part on the rear side of the tilting shaft section 15c of the rear seat 15 and a part of the tilting shaft section 15c configures the vehicle body side support section 22a of the second support section 22. The vehicle body side restricting section 31 is provided adjacent to the vehicle width direction inner side of the tilting shaft section 15c and engages with a second section to be restricted 10c formed in the short edge portion 10S on the front side of the luggage board 10. That is, the second section to be restricted 10c capable of engaging with the vehicle body side restricting section 31 is formed at the short edge portion 10S of the luggage board 10. In other words, in the modification 1, the luggage board 10 includes a second edge portion where the second section to be restricted 10c capable of engaging with the vehicle body side restricting section 31 is formed and the second edge portion is the short edge portion 10S in the example shown.

Specifically, in the modification 1, in a state in which the lower restricting section 5 is fit in the first section to be restricted 10b on the front side in the lower support section 2 of the first support section 21, a front part (the short edge portion 10S on the front side) of the luggage board 10 is placed on an upper part of a rear part of the tilting shaft section 15c on the right side of the rear seat 15 and the luggage board 10 is disposed in the horizontal orientation. That is, in the example shown in Figure 8 and Figure 9, the length (that is, the longitudinal direction width W2) of the long edge portion 10L of the luggage board 10 is set to a length for enabling the short edge portion 10S to be placed on the upper part of the rear part of the tilting shaft section 15c in a state in which the first section to be restricted 10b on the front side is fit in the lower restricting section 5. The tilting shaft section 15c on the right side supports, in cooperation with the first support section 21, the luggage board 10 separated from the side trim 1 on the left side and disposed in the horizontal orientation. Therefore, in the modification 1, the vehicle body side support section 22a of the second support section 22 is the tilting shaft section 15c on the right side of the rear seat 15.

In the modification 1, the vehicle body side restricting section 31 and the second section to be restricted 10c are formed to be capable of engaging with each other. The vehicle body side restricting section 31 is formed in, for example, a convex shape or a concave shape and the second section to be restricted 10c is formed in a concave shape or a convex shape corresponding to the shape of the vehicle body side restricting section 31. In the example shown, the vehicle body side restricting section 31 is formed in a convex shape and the second section to be restricted 10c is formed in a concave shape corresponding to the convex shape of the vehicle body side restricting section 31. The vehicle body side restricting section 31 includes a plate-shaped member attached to a rear part of the seat back section 15b that takes the laid-down orientation. The vehicle body side restricting section 31 includes a base 31a and a projecting section 31b. The base 31a is fixed to the rear part of the seat back section 15b by a fixture 31c such as a bolt. The projecting section 31b is a portion that is formed continuously from the base 31a and fits in the second section to be restricted 10c and engages with the second section to be restricted 10c. The projecting section 31b is formed, in plan view from the thickness direction one side, in a trapezoidal shape tapered toward the projecting direction distal end from the base 31a side.

In the modification 1, the second section to be restricted 10c of the luggage board 10 is formed at the short edge portion 10S on the front side of the luggage board 10 in a shape capable of coming into contact with the vehicle body side restricting section 31.
Specifically, the second section to be restricted 10c is formed as a generally trapezoidal slit with a slit width in the vehicle width direction narrowed toward the vehicle rear from an opened end side on the vehicle front side. The vehicle body side restricting section 31 includes a movement restriction surface 31d that comes into contact with the second section to be restricted 10c and restricts movement in the vehicle width direction of the luggage board 10. The movement restriction surface 31d includes a left side surface 31d1 and a right side surface 31d2.

The luggage board 10 is configured such that movement in the vehicle width direction of the luggage board 10 is restricted when the second section to be restricted 10c comes into contact with the left side surface 31d1 or the right side surface 31d2. A projecting end face 31e of the projecting section 31b connects the rear end of the left side surface 31d1 and the rear end of the right side surface 31d2. The luggage board 10 is configured such that movement to the vehicle front of the luggage board 10 is restricted when the second section to be restricted 10c comes into contact with the projecting end face 31e. Stable support for the luggage board 10, stable placement of luggage, and improvement of work efficiency in the luggage board 10 are more effectively achieved by the sidewall side restricting sections (5, 6, and 7) and the movement restricting section 30 including the vehicle body side restricting section 31.

In the modification 1, a height position of the seat upper surface 15b1 of the seat back section 15b of the rear seat 15 and a height position of the upper surface of the luggage board 10 supported by the lower support section 2 generally coincide with each other. With such a configuration, a flat plane can be formed by the seat upper surface (the back surface) 15b1 of the seat back section 15b of the rear seat 15 and the luggage board 10. As a result, luggage having a width larger than the lateral direction width W1 of the luggage board 10 can be stably supported by the seat back section 15b and the luggage board 10 and the luggage can be easily slid between the seat back section 15b and the luggage board 10. With the configuration, when not only the luggage board 10 but also the seat upper surface 15b1 of the seat back section 15b of the rear seat 15 is also used as a work desk, a range having a flat plane in the work desk can be expanded in the vehicle width direction and forward.

In the example shown, the rear seat 15 is a seat of a so-called bench seat type including one seat section 15a and one seat back section 15b. However, not only this, but the seat sections 15a and the seat back sections 15b may be individually provided on the left and the right. In this case, in the rear seat 15, the seat section 15a and the seat back section 15b on the left side and the seat section 15a and the seat back section 15b on the right side may be respectively individually configured as seats of a dive down type. In the case of this configuration, while forming a wide place for putting luggage or a work desk with the laid-down one seat back section 15b and the luggage board 10, by moving the other seat back section 15b and the seat section 15a to the housing position (the foot space), an area that can be used as the luggage compartment C can be expanded forward in a region on the other side of the vehicle compartment.

In the modification 1, an example of the second section to be restricted 10c in a form in which the front part of the luggage board 10 is placed on the tilting shaft section 15c as shown in Figure 8 and Figure 9 is explained. However, even when the front part of the luggage board 10 is placed on the seat upper surface 15b1 of the seat back section 15b of the rear seat 15 as shown in Figure 6 and Figure 7, the luggage board 10 can include the second section to be restricted 10c. In this case, although illustration is omitted, the vehicle body side restricting section 31 is configured by a portion overlapping the front part of the luggage board 10 on the seat upper surface (the back surface) 15b1 of the seat back section 15b of the rear seat 15 and the second section to be restricted 10c is provided on the lower surface of the front part of the luggage board 10. The vehicle body side restricting section 31 is formed in, for example, a convex shape or a concave shape, and the second section to be restricted 10c is formed in a concave shape or a convex shape corresponding to the shape of the vehicle body side restricting section 31.

### (Modification 2)

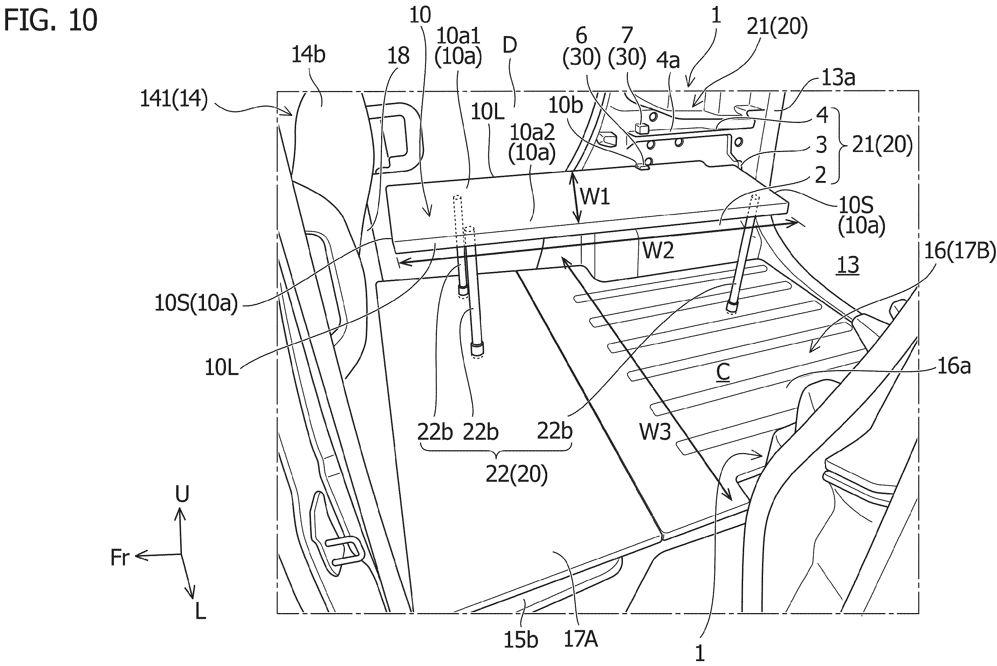

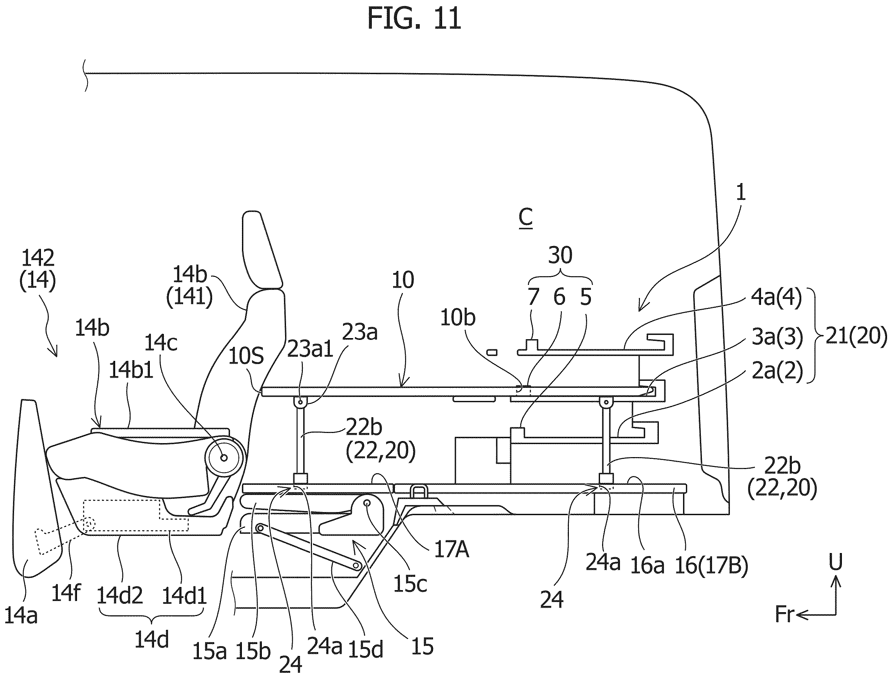

Next, a modification 2 is explained with reference to Figure 10 and Figure 11. Figure 10 and Figure 11 are diagrams for explaining an example (the modification 2) of a support state of the luggage board 10 in a state in which the rear seat 15 is housed. Figure 10 is a perspective view and Figure 11 is a conceptual diagram viewed from a side.

As shown in Figure 10 and Figure 11, the length (the longitudinal direction width W2) of the long edge portion 10L of the luggage board 10 may be generally set to a length equivalent to the distance from the seat back section 14b of the front seat 14 (in other words, the rear edge of the center pillar trim 18 or the opening front edge of the rear side door opening 12) to the opening edge portion 13a of the back door opening 13. In this case, one first section to be restricted 10b is formed in a rear part of the long edge portion 10L on the right side of the luggage board 10.

The second support section 22 may include a leg member 22b instead of the vehicle body side support section 22a. The leg member 22b is a member that supports, from below, the luggage board 10 extending in the vehicle up-down direction below the luggage board 10.

The leg member 22b is desirably detachably attached to the luggage board 10. In this case, for example, a spiral male screw section may be formed in one of the leg member 22b and the luggage board 10, a spiral female screw section capable of screwing with the male screw section may be formed in the other of the leg member 22b and the luggage board 10, and the leg member 22b may be turned with respect to the luggage board 10, whereby the leg member 22b may be configured to be detachably attachable to the luggage board 10. Besides, a mechanical lock mechanism section that engages the leg member 22b and the luggage board 10 with each other and releasably locks (maintains) an engaged state of the leg member 22b and the luggage board 10 may be provided in the leg member 22b or the luggage board 10.

Furthermore, the support structure section 20 desirably includes a leg member movement restricting section 24 that is provided in the floor section 16 and restricts movement (in other words, displacement or positional deviation) of the leg member 22b. The leg member 22b is desirably configured to be capable of extending and contracting in the up-down direction according to a support height of the luggage board 10 by the first support section 21.

In the modification 2, specifically, the rear seat 15 is moved to the housing position and covered from above by the auxiliary board 17A. In this case, the front-rear length of the auxiliary board 17A is increased to length corresponding to the length of the seat back section 15b of the rear seat 15. In this state, a height position of the upper surface of the auxiliary board 17A and a height position of the floor upper surface 16a generally coincide with each other. A wide space having a flat bottom surface is provided behind the front seat 14. In a state in which the middle restricting section 6 is fit in the first section to be restricted 10b in the middle support section 3 of the first support section 21, the front part of the luggage board 10 is brought close to the standing seat back section 14b of the driver's seat side seat 141 and the luggage board 10 is disposed in the horizontal orientation. In this state, one board outer edge portion 10a1 of the luggage board 10 is disposed along the side trim 1 on the right side and a rear side door D on the right side.

In the modification 2, the leg member 22b is formed in, for example, a columnar shape or a plate shape, in the example shown, in a cylindrical shape. In the example shown, the plurality of leg members 22b are provided to be separated from one another. Although not particularly limited, in the example shown, three leg members 22b are provided. One leg member 22b among the three leg members 22b is provided below a portion on the front end side in one (right side) board outer edge portion 10a1 of the luggage board 10 and the remaining two leg members 22b are provided below a portion on the front end side and below a portion on the rear end side in the other (left side) board outer edge portion 10a2 of the luggage board 10. One leg member 22b on the right side is located in the front of the first support section 21 and one (right side) board outer edge portion 10a1 of the luggage board 10 is supported from below by one leg member 22b on the right side and the first support section 21. The other (left side) board outer edge portion 10a2 of the luggage board 10 is supported from below by the two leg members 22b on the left side. That is, the three leg members 22b, which are the second support section 22, support, in cooperation with the first support section 21, the luggage board 10 separated from the side trim 1 on the left side and disposed in the horizontal orientation. Therefore, the luggage board 10 is more stably supported by the first support section 21 and the plurality of leg members 22b (the second support section 22).

In the modification 2, the upper end of the leg member 22b is detachably coupled to the luggage board 10 via a leg coupling section 23a and the lower end of the leg member 22b is in contact with the floor upper surface 16a or the upper surface of auxiliary board 17A. The leg coupling section 23a includes a turning shaft section 23a1 that supports the upper end portion of the leg member 22b. The leg member 22b is supported to be capable of turning centering on the turning shaft section 23a1. The leg member 22b is turned to a position where the leg member 22b is parallel to the luggage board 10 at a time when the board is not in use and is easily expanded at a time when that board is to be used. At a time when the board is not in use, the coupling by the leg coupling section 23a is released, whereby the leg member 22b is detached from the luggage board 10 and the second support section 22 (the leg member 22b) is easily housed in the vehicle.

Note that, although illustration is omitted, the turning shaft section 23a1 may be provided in a vehicle body side support section like the auxiliary board 17A or the seat back section 15b of the rear seat 15, the leg member 22b may be supported to be capable of being displaced (turning) between a standing orientation and a laid-down orientation with respect to the vehicle body side support section (the auxiliary board 17A or the seat back section 15b) via the turning shaft section 23a1, and the leg coupling section 23a may be provided between the lower surface of the luggage board 10 and the upper end portion of the leg member 22b. In this case, a hollow section opened upward may be provided in the vehicle body side support section (for example, the auxiliary board 17A or the seat back section 15b) and the turning shaft section 23a1 and the leg member 22b in the laid-down orientation may be configured to be housed in the hollow section.

In the modification 2, specifically, the leg member movement restricting section 24 is an element that blocks movement of a lower part of the leg member 22b in a direction along a floor surface including the floor upper surface 16a of the floor section 16 and the upper surface of the auxiliary board 17A or fixes the lower part of the leg member 22b to the floor surface to restrict the movement of the lower part of the leg member 22b. In the example shown, the leg member movement restricting section 24 is formed, on the floor surface (that is, a vehicle body side member), as a fitting hole section 24a in which the lower part of the leg member 22b fits. The lower part of the leg member 22b fits in the fitting hole section 24a, whereby the leg member movement restricting section 24 restricts the movement of the leg member 22b in the direction along the floor surface. Note that the leg member movement restricting section 24 may be, for example, a groove section or a vertical wall section extending in the vehicle front-rear direction. In this case, the leg member movement restricting section 24 restricts, with a sidewall of the groove section or the vertical wall section, the movement in the vehicle width direction of the lower part of the leg member 22b. The leg member movement restricting section 24 may be a fixture for fixing the lower part of the leg member 22b to the floor surface. In this case, the leg member movement restricting section 24 fixes the lower part of the leg member 22b to the floor surface with the fixture to restrict the movement of the lower part of the leg member 22b. As a result, the luggage board 10 is more securely stably supported.

In the modification 2, it can also be said that the support structure section 20 includes, as the second support section 22 provided at a position separated from the first support section 21, a front side support section that supports the front part of the luggage board 10 and a rear side support section that supports the rear part of the luggage board 10. In the example shown in Figure 10 and Figure 11, the front side support section of the second support section 22 is configured by the leg member 22b on the front side, the auxiliary board 17, and the seat back section 15b of the rear seat 15 and the rear side support section of the second support section 22 is configured by the leg member 22b on the rear side. In the modification 2, it can also be said that the support structure section that supports the front part of the luggage board 10 is configured by the leg member 22b on the front side, the auxiliary board 17A, and the seat back section 15b and the support structure section that supports the rear part of the luggage board 10 is configured by the leg member 22b on the rear side, the floorboard 17B, and the support sections (2, 3, and 4) of one side trim 1.

The front part of the luggage board 10 may be supported by the seat back section 15b of the rear seat 15 or the seat section 10a not via the auxiliary board 17A or may be supported by the floorboard 17B like the rear part of the luggage board 10.

### (Modification 3)

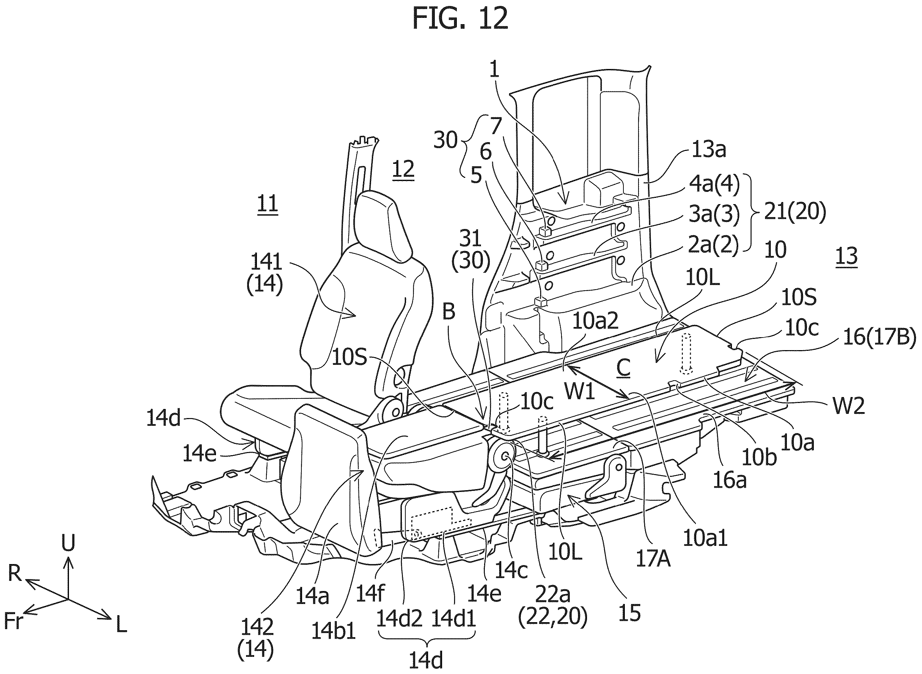

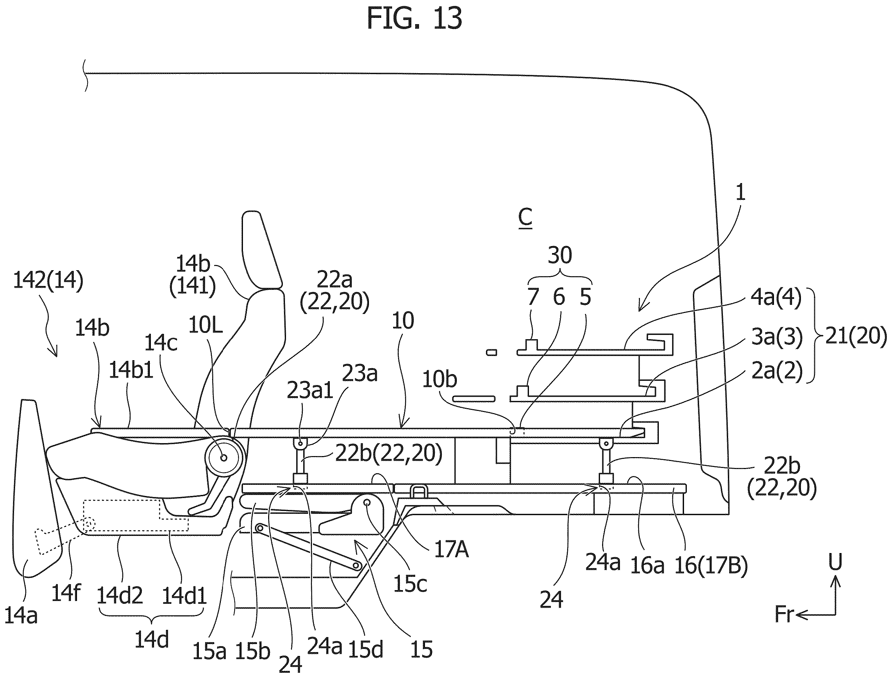

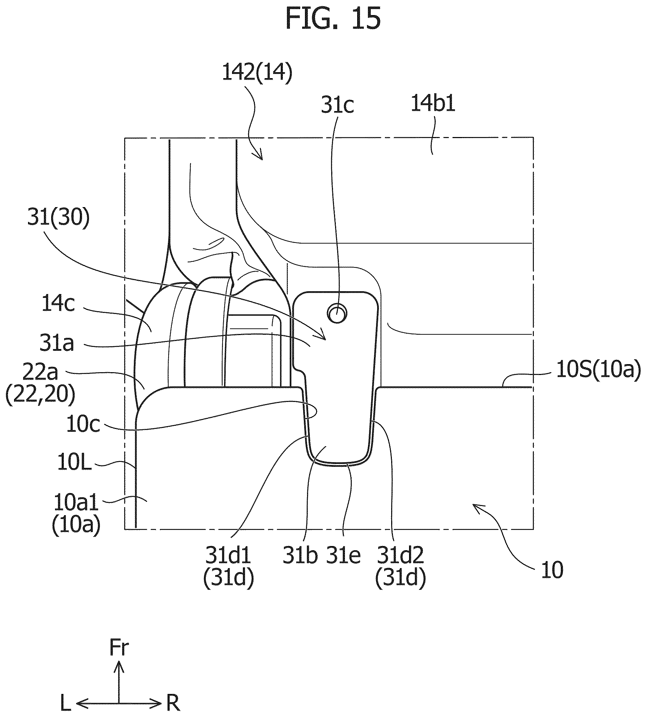

Next, a third modification is explained with reference to Figure 12 to Figure 15. Figure 12 to Figure 15 are diagrams for explaining another example (the modification 3) of the support state of the luggage board 10 in the state in which the rear seat 15 is housed. Figure 12 is a perspective view viewed from the outside of the vehicle compartment, Figure 13 is a conceptual diagram viewed from a side, Figure 14 is a perspective view viewed from the inside of the vehicle compartment, and Figure 15 is an enlarged plan view in which a B part shown in Figure 12 is viewed from above.

As shown in Figure 12 to Figure 15 (in particular, Figure 12 and Figure 14), the luggage board 10 may be disposed close to, not the side trim 1 on the right side, but the side trim 1 on the left side. In this case, "one sidewall" according to the present invention is the sidewall (the side trim 1) on the left side, "the other sidewall" according to the present invention is the sidewall (the side trim 1) on the right side, and the board outer edge portion 10a1, which is "one outer edge portion in the vehicle width direction" of the luggage board 10, is supported by the first support section 21 provided on the sidewall on the left side. A region wide in the vehicle front-rear direction not blocked by the luggage board 10 is secured between the luggage board 10 and the side trim 1 on the right side.

As shown in Figure 12 to Figure 15, the vehicle body side support section 22a may be the tilting shaft section 14c provided in the rear part of the bottom section 14d of the front seat 14 (specifically, the passenger seat side seat 142). The movement restricting section 30 may include the vehicle body side restricting section 31 provided around the tilting shaft section 14c, which is the vehicle body side support section 22a. The second support section 22 includes, in addition to the vehicle body side support section 22a, the leg members 22b having the same structure as, and as many as, those in the modification 2. The first section to be restricted 10b is formed in the rear part of the long edge portion 10L on the left side of the luggage board 10.

Specifically, in the modification 3, in a state in which the middle restricting section 6 is fit in the first section to be restricted 10b in the middle support section 3 of the first support section 21, the short edge portion 10S on the front side of the luggage board 10 is placed on an upper part on the rear side of the tilting shaft section 14c of the passenger seat side seat 142 of the front seat 14 and a part of the tilting shaft section 14c configures the vehicle body side support section 22a of the second support section 22. The vehicle body side restricting section 31 is provided adjacent to the vehicle width direction inner side of the tilting shaft section 14c and engages with the second section to be restricted 10c formed in the short edge portion 10S on the front side of the luggage board 10.

Referring to Figure 12 to Figure 15, the luggage board 10 extends in the vehicle front-rear direction along the side trim 1 on the left side and the rear side door D on the left side and is disposed to be separated from the side trim 1 on the right side. In the example shown, the board outer edge portion 10a1 of the luggage board 10 is supported by the middle support section 3 in the first support section 21 of the side trim 1 on the left side. In the modification 3, for example, the length (the lateral direction width W1) of the short edge portion 10S of the luggage board 10 is set to width of the same degree as the seat width of the passenger seat side seat 142 and the length (the longitudinal direction width W2) of the long edge portion 10L of the luggage board 10 is set to length adjusted to the distance from the support sections (2, 3, and 4) of the side trim 1 on the right side to the support sections (2, 3, and 4) of the side trim 1 on the left side (specifically, length slightly shorter than the interior width W3) (that is, W1<W2<W3).

Specifically, in seat arrangement shown in Figure 12 to Figure 15, (1) the rear seat 15 is moved to the housing position and covered from above by the auxiliary board 17A, (2) a height position of the upper surface of the auxiliary board 17A and a height position of the floor upper surface 16a generally coincide with each other, (3) the seat section 14a of the passenger seat side seat 142 is swung forward and the seat back section 14b is laid down to the front side, and (4) a height position of the seat upper surface 14b1 of the seat back section 14b in the laid-down state of the passenger seat side seat 142 and a height position of the upper surface of the luggage board 10 supported by the middle support section 3 generally coincide with each other.

The vehicle body side restricting section 31 in the modification 3 is provided, not around the tilting shaft section 15c of the rear seat 15, but around the tilting shaft section 14c of the passenger seat side seat 142. The vehicle body side restricting section 31 (see Figure 15) in the modification 3 has a shape symmetrical with the vehicle body side restricting section 31 (see Figure 9) in the modification 2. In the modification 3, the second section to be restricted 10c capable of engaging with the vehicle body side restricting section 31 is formed in the short edge portion 10S on the rear side as well.

In the modification 3, the first section to be restricted 10b formed in the long edge portion 10L serving as the first edge portion and the second section to be restricted 10c formed in the short edge portion 10S serving as the second edge portion are formed in the same shape as each other. Therefore, in the modification 3, when the luggage board 10 is disposed in the horizontal orientation in a state in which the longitudinal direction (the extending direction of the long edge portion 10L) is directed to the vehicle width direction, the luggage board 10 is stretched from the support sections (2, 3, and 4) of the side trim 1 on the left side to the support sections (2, 3, and 4) of the side trim 1 on the right side. In this case, one second section to be restricted 10c engages with the sidewall side restricting sections (5, 6, and 7) of the support sections (2, 3, and 4) on the left side, the other second section to be restricted 10c engages with the sidewall side restricting sections (5, 6, and 7) of the support sections (2, 3, and 4) on the right side, and the second section to be restricted 10c also uses the function of the first section to be restricted 10b. Accordingly, variations of uses of the luggage board 10 increase and a reduction in manufacturing cost can be achieved. In the luggage board support structure according to the modification 3 configured as explained above, the same action effects as those in the present embodiment or the other modifications explained above are achieved.

### (Other modifications)

In the present embodiment or the modifications explained above, the sidewall side restricting sections (5, 6, and 7) are formed in the convex shape and the first section to be restricted 10b of the luggage board 10 is formed in the concave shape corresponding to the convex shape of the sidewall side restricting sections (5, 6, and 7), but they are not limited thereto.

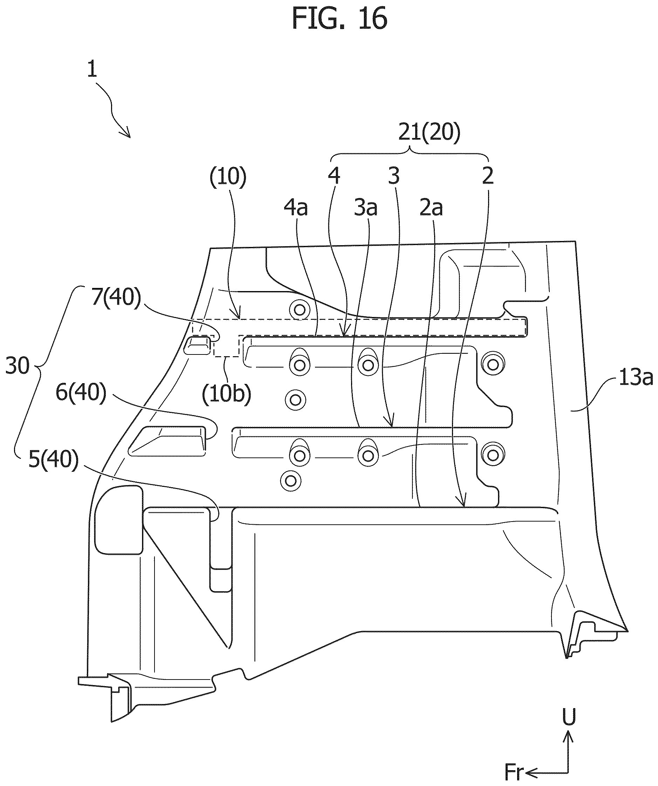

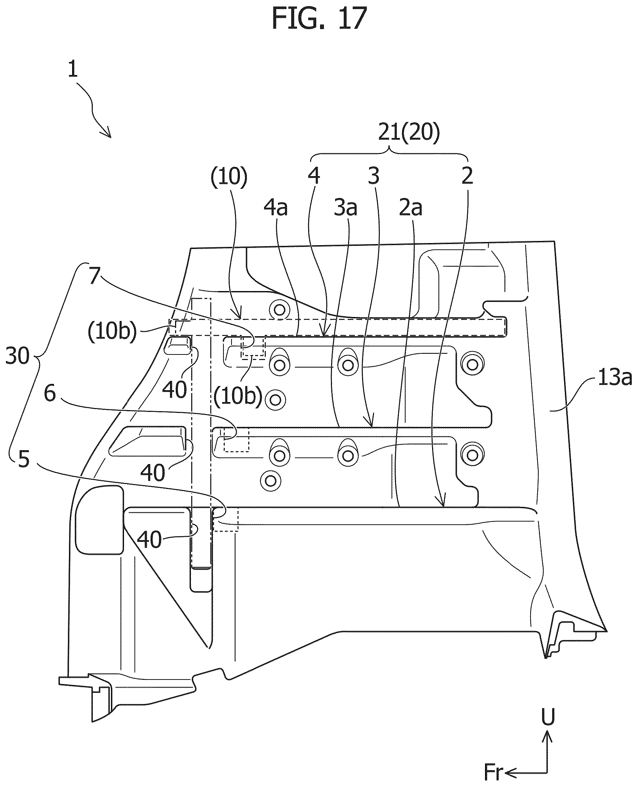

For example, as shown in Figure 16 and Figure 17, the first section to be restricted 10b of the luggage board 10 may be formed in a convex shape and the sidewall side restricting sections (5, 6, and 7) may be formed in a concave shape (as, for example, slits, recesses, or through-holes) corresponding to the convex shape of the first section to be restricted 10b. Specifically, in an example shown in Figure 16, the sidewall side restricting sections (5, 6, and 7) are configured by the vertical support section 40 formed as the groove section extending in the vehicle up-down direction and opened to the vehicle width direction inner side in the side trim 1. In an example shown in Figure 17, the sidewall side restricting sections (5, 6, and 7) formed in the concave shape are formed at a position different from the vertical support section 40 (here, behind the vertical support section 40).

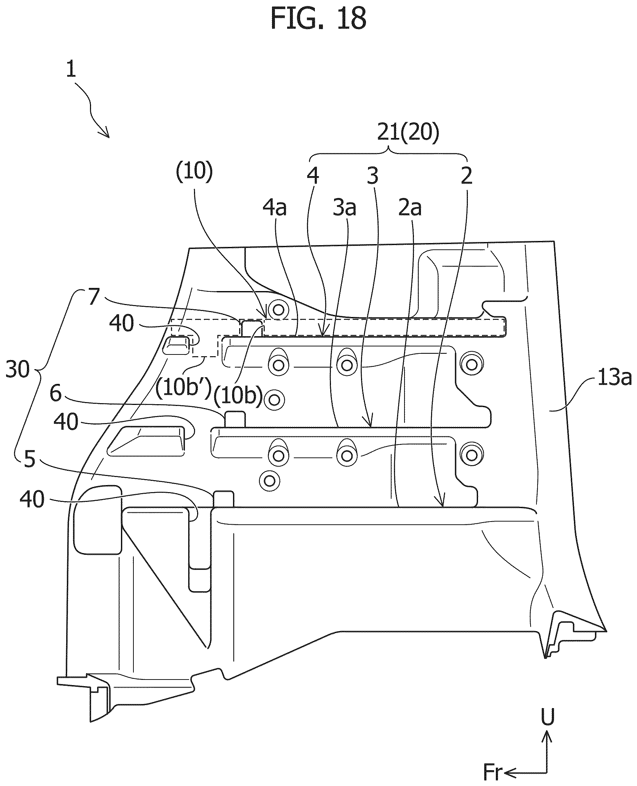

As shown in Figure 18, in the movement restricting section 30, in addition to the sidewall side restricting sections (5, 6, and 7) formed in a convex shape, another sidewall side restricting section formed in a concave shape (for example, as a slit, a recess, or a through-hole) may be formed at a position offset to one side of the vehicle front-rear direction (in an example shown, the vehicle front) with respect to the sidewall side restricting sections (5, 6, and 7). Specifically, in the example shown in Figure 18, the other sidewall side restricting section is configured by the vertical support section 40. At a position offset to the vehicle front with respect to the first section to be restricted 10b of the luggage board 10, another first section to be restricted 10b' is formed in a convex shape corresponding to the concave shape of the other sidewall side restricting section (the vertical support section 40).

When the sidewall side restricting sections (5, 6, and 7) formed in the concave shape are formed at the position different from the vertical support section 40 as in the example shown in Figure 17, in order to support the luggage board 10 in the vertical orientation, for example, as indicated by an alternate long and two short dashes line in Figure 17, in a state in which the luggage board 10 is inserted into the vertical support section 40 and disposed in the vertical orientation, the luggage board 10 only has to be configured such that the convex-shaped first section to be restricted 10b of the luggage board 10 is located at a position higher than the support surface 4a at the top stage. In this case, the lower end of the first restricting section 10b is brought into contact with the support surface 4a. Not only this, but, although illustration is omitted, the groove width of the vertical support section 40 is set to width slightly larger than a board thickness including the convex-shaped first section to be restricted 10b of the luggage board 10 and, in a state in which the luggage board 10 is disposed in the vertical orientation, the luggage board 10 is configured such that the first section to be restricted 10b is located in a groove of the vertical support section 40 of at least one of the upper stage, the middle stage, and the lower stage, whereby movement in the vehicle front-rear direction of the luggage board 10 is restricted.

In the present embodiment or the modifications explained above, the rear side door D and the center pillar trim 18 may be included in the vehicle body side member in which the vehicle body side support section 22a is provided. That is, the vehicle side support section 22a may not be limitedly provided in the vehicle seats (14 and 15) or at the opening edge portion 13a of the back door opening 13 and may be provided in the rear side door D or the center pillar trim 18. The vehicle body side support section 22a may not be limitedly provided in one part in the vehicle body side member but may be provided in a plurality of parts.

The driver's seat side seat 141 may be disposed on the left side of the vehicle compartment and the passenger seat side seat 142 may be disposed on the left side of the vehicle compartment. The vehicle body side restricting section 31 is not limited to one of the driver's seat side seat 141, the passenger seat side seat 142, and the rear seat 15 and may be two or more thereof. The vehicle body side restricting section 31 may be provided in a plurality of vehicle seats (141, 142, and 15) according to variations of seat arrangement. In this case, a plurality of types of luggage boards 10 are provided. In the side trims 1, the support sections (2, 3, and 4) are not limited to the three stages and may be one stage, may be two stages, or may be four or more stages.

The luggage board 10 can be formed in an appropriate shape if, in a state in which the luggage board 10 is disposed close to one side trim 1 and in the horizontal orientation, the luggage board 10 is formed in a size (a dimension) capable of securing a gap between the luggage board 10 and the other side trim 1. For example, the luggage board 10 can be formed in appropriate shapes such as a generally square (a square having a side shorter than the interior width W3), ellipse (at least length in the short axis direction is shorter than the interior width W3), circle (a circle having a diameter shorter than the interior width W3), and L shape (an L shape having width shorter than the interior width W3).

### [Reference Signs List]

- 1: Side trim
- 1a: Reference plane
- 2: Lower support section (first support section)
- 2a: Support surface
- 3: Middle support section (first support section)
- 3a: Support surface
- 4: Upper support section (first support section)
- 4a: Support surface
- 5: Lower restricting section (sidewall side restricting section)
- 6: Middle restricting section (sidewall side restricting section)
- 7: Upper restricting section (sidewall side restricting section)
- 10: Luggage board
- 10a: Outer edge portion
- 10a1: Board outer edge portion (outer edge portion on one side of the vehicle width direction of the luggage board)
- 10a2: Board outer edge portion (outer edge portion on the other side of the vehicle width direction of the luggage board)
- 10b: First section to be restricted
- 10b': Another first section to be restricted
- 10c: Second section to be restricted
- 10L: Long edge portion (first edge portion)
- 10S: Short edge portion (second edge portion)
- 11: Front side door opening
- 12: Rear side door opening
- 13: Back door opening
- 13a: Opening edge portion
- 14: Front seat (vehicle seat)
- 141: Driver's seat side seat (vehicle seat)
- 142: Passenger seat side seat (vehicle seat)
- 14a: Seat section
- 14b: Seat back section
- 14b1: Seat upper surface
- 14c: Tilting shaft section
- 14d: Bottom section
- 14d1: Bottom frame
- 14d2: Bottom trim
- 14f: Turning mechanism
- 14e: Slide rail
- 15: Rear seat (vehicle seat)
- 15a: Seat section
- 15b: Seat back section
- 15b1: Seat upper surface
- 15b2: Rear part
- 15c: Tilting shaft section
- 15d: Moving mechanism
- 16: Floor section
- 16a: Floor upper surface
- 17A: Auxiliary board
- 17B: Floorboard
- 18: Center pillar trim
- 20: Support structure section
- 21: First support section
- 22: Second support section
- 22a: Vehicle body side support section
- 22b: Leg member
- 23a: Leg coupling section
- 23a1: Turning shaft section
- 24: Leg member movement restricting section
- 24a: Fitting hole section
- 30: Movement restricting section
- 31: Vehicle body side restricting section
- 31a: Base
- 31b: Projecting section
- 31c: Fixture
- 31d: Movement restriction surface
- 31d1: Left side surface
- 31d2: Right side surface
- 31e: Projecting end face
- 40: Vertical support section
- C: Luggage compartment
- D: Rear side door
- W1: Lateral direction width
- W2: Longitudinal direction width
- W3: Interior width

## Claims

1. A luggage board support structure comprising, in a rear part in a vehicle compartment of a vehicle, a support structure section that supports a luggage board disposed in a horizontal orientation facing a floor section of the vehicle compartment, wherein
the support structure section includes:
a first support section that is provided on one sidewall of the vehicle compartment and supports a part of an outer edge portion of the luggage board; and
a second support section capable of supporting, in cooperation with the first support section, the luggage board disposed close to the one sidewall of the vehicle compartment and separated from another sidewall of the vehicle compartment and disposed in the horizontal orientation, the second support section being provided at a position separated from the first support section.

2. The luggage board support structure according to claim 1, wherein at least a part of the second support section is provided at a position separated from the first support section to a vehicle width direction inner side.

3. The luggage board support structure according to claim 2, wherein
the first support section supports an outer edge portion on one side of a vehicle width direction of the luggage board, and
at least a part of the second support section includes a portion located below an outer edge portion on another side of the vehicle width direction of the luggage board.

4. The luggage board support structure according to claim 1, wherein the support structure section includes a movement restricting section that restricts movement of the luggage board.

5. The luggage board support structure according to claim 4, wherein the movement restricting section includes a sidewall side restricting section provided on the one sidewall.

6. The luggage board support structure according to claim 4, wherein
the second support section includes a vehicle body side support section that is provided in a vehicle body side member disposed in the vehicle compartment and supports the luggage board, and
the movement restricting section includes a vehicle body side restricting section provided around the vehicle body side support section.

7. The luggage board support structure according to any one of claims 1 to 6, wherein the second support section includes a leg member that extends in a vehicle up-down direction below the luggage board and supports the luggage board from below.

8. The luggage board support structure according to claim 7, wherein the support structure section includes a leg member movement restricting section that is provided in the floor section and restricts movement of the leg member.

9. The luggage board support structure according to claim 7, wherein the leg member is detachably attached to the luggage board.

10. The luggage board support structure according to claim 5, wherein
the second support section includes a vehicle body side support section that is disposed in the vehicle compartment and supports the luggage board,
the movement restricting section includes a vehicle body side restricting section provided around the vehicle body side support section,
the luggage board includes a first edge portion where a first section to be restricted capable of engaging with the sidewall side restricting section is formed and a second edge portion where a second section to be restricted capable of engaging with the vehicle body side restricting section is formed, and
the first section to be restricted and the second section to be restricted are formed in a same shape as each other.

11. The luggage board support structure according to claim 6 or 10, wherein the vehicle body side support section is provided in a vehicle seat.

12. The luggage board support structure according to claim 6 or 10, wherein the vehicle body side support section is provided at an opening edge portion of a back door opening.
